Europäisches Patentamt

European Patent Office

Office européen des brevets

(19)

(11) Veröffentlichungsnummer: **0 103 720**
**A1**

(12) **EUROPÄISCHE PATENTANMELDUNG**

(21) Anmeldenummer: 83107642.7

(22) Anmeldetag: 03.08.83

(51) Int. Cl.³: **F 04 C 5/00**
**F 01 C 21/08, B 29 F 1/10**

(30) Priorität: 23.08.82 US 410378

(43) Veröffentlichungstag der Anmeldung:
28.03.84 Patentblatt 84/13

(84) Benannte Vertragsstaaten:
BE DE FR GB IT NL SE

(71) Anmelder: ITT INDUSTRIES INC.
320 Park Avenue
New York, NY 10022(US)

(84) Benannte Vertragsstaaten:
BE FR GB IT NL SE

(71) Anmelder: Deutsche ITT Industries GmbH
Hans-Bunte-Strasse 19 Postfach 840
D-7800 Freiburg(DE)

(84) Benannte Vertragsstaaten:
DE

(72) Erfinder: Knepshield, Robert Eugene
2317 Eastbluff Drive
Newport Beach California(US)

(74) Vertreter: Gähr, Hans-Dieter et al,
c./o. Standard Elektrik Lorenz AG Patent- und
Lizenzwesen Postfach 300 929 Kurze Strasse 8
D-7000 Stuttgart 30(DE)

(54) Schaufelradanordnung für Pumpen.

(57) Eine flexible Schaufelradanordnung (26) für Pumpen wird beschrieben, in der das Schaufelrad (12), das die flexiblen Flügel (18) enthält, um einen Kern (14) von im wesentlichen demselben Material, aber von größerer Shore-härte, gespritzt ist, ohne eine dazwischenliegende Befestigungsart anzuwenden, um eine einstückige, einheitliche Struktur zu erhalten.

FIG. 3

EP 0 103 720 A1

R.E.Knepshield-2

Schaufelradanordnung für Pumpen

Die Erfindung betrifft im allgemeinen eine Schaufelradanordnung für Pumpen, die aus einem relativ starren Kern, der eine Antriebswelle aufnehmen kann, und einem relativ weichen Schaufelrad besteht, dessen Mittelteil oder Nabe mit dem Kern verbunden ist, und das am äußeren Umfang mit flexiblen Flügeln versehen ist, und insbesondere solch eine Anordnung, die aus starren und flexiblen Teilen zusammengesetzt ist.

Es ist eine Schaufelradanordnung des allgemeinen Typs aus der US-PS 3.014.429 (Doble) bekannt, in der ein Schaufelrad aus elastomeren Material um einen starren Kern oder Einsatz gespritzt ist. Das flexible Glied der Anordnung, nämlich das Schaufelrad, ist aus Neopren (2 Chlorbutadien 1,3), Gummi, Viton (Viniliden-Chlorid-Hexafluorpropylen) oder anderen elastomerischen bzw. gummiähnlichen Materialien hergestellt. Der Kern besteht aus Messing, Stahl, Epoxidharz oder ännlichen starren Materialien. Das flexible Schaufelrad ist mit aem Kern beispielsweise durch

R.E.Knepshield-2

Verklebung verbunden, wobei der Klebstoff an der äußeren Oberfläche des Kernes aufgetragen ist, an der das Schaufelrad an dem Kern haftet. Wenn das flexible Schaufelrad an der Stelle um den Kern gespritzt wird, trocknet die Verklebung auch, wodurch eine mechanische Verbindung zwischen dem Schaufelrad und dem Kern hergestellt wird. Klebeverbindungen sind oft dadurch problematisch, daß sie eine Haftung zwischen sehr unterschiedlichen Materialien herstellen müssen, wie beispielsweise zwischen solchen, die eine spezielle Behandlung bzw. Vorbehandlung benötigen. Wenn bei der Konstruktion von Schaufelrädern neue Materialien verwendet werden, müssen für diese Materialien auch die Klebeverbindungen neu untersucht und gegebenenfalls ein anderer Kleber eingeführt werden.

Es ist weiterhin in der Press- bzw. Spritztechnik bekannt, daß elastomere Materialien mit verschiedener Shorehärte übereinandergeschichtet werden können, um Unterschiede in der Flexibilität oder der Elastizität der verpressten Teile zu erhalten. So ein Verfahren wird beispielsweise zur Herstellung von Schwimmflossen und auch zur Herstellung von Einsätzen für elektrische Steckverbinder verwendet und ist in der GB-PS 968.707 beschrieben. In jedem Fall bestehen sowohl die weichen als auch die starren Teile aus demselben Grundmaterial.

Die US-PS 4.293.128 betrifft einen elektrischen Steckerkörper, der aus zwei Plastikteilen besteht, die im wesentlichen aus demselben Materialien bestehen, nämlich Materialien, die dasselbe Grundpolymer aufweisen.

0103720

R.E.Knepshield-2

Bis jetzt sind nach meiner Kenntnis solche Zusammensetzungen noch nicht bei der Herstellung von Schaufelrädern für Pumpen verwendet worden.

Es ist deshalb die Aufgabe der vorliegenden Erfindung eine Schaufelradanordnung für Pumpen zu schaffen, die aus einem relativ starren Kern und aus einem relativ weichen Schaufelrad besteht, und die beiden Teile miteinander zu verbinden, ohne zwischen den beiden Teilen eine Klebeverbindung anzuwenden.

Diese Aufgabe wird durch die im Kennzeichen des Anspruchs 1 angegebenen Maßnahmen gelöst.

Auf diese Weise können durch die Erfindung eine große Anzahl von elastomeren Materialien verwendet werden, um eine Schaufelradanordnung für Pumpen herzustellen, ohne die Notwendigkeit, Klebemittel auf den Kern der Anordnung während des Herstellungsverfahrens aufbringen zu müssen und auch ohne sich darum kümmern zu müssen, neue Klebemittel zu erforschen, wenn neue Materialien für die beiden miteinander zu verklebenden Teile der Schaufelradanordnung verwendet werden sollen.

Vorteilhafte Weiterbildungen der Erfindung sind in den Unteransprüchen enthalten.

Die Erfindung wird anhand von Beispielen beschrieben. In den Zeichnungen zeigt :

Fig. 1 eine Draufsicht auf eine konventionelle Schaufel-radanordnung mit flexiblen Flügeln,

Fig. 2 einen Ausschnitt aus der Schaufelradanordnung nach Fig. 1, die an den dargestellten Flügeln des Schaufelrades die Auslenkung der Flügel zeigt, wenn das Schaufelrad sich in einem Pumpengehäuse dreht,

Fig. 3 eine Draufsicht auf die Schaufelradanordnung nach der Erfindung.

Das in den Fig. dargestellte Beispiel wird nun im Detail beschrieben, wobei gleiche Bezugszeichen für gleiche in den Fig. dargestellten Teile verwendet sind.

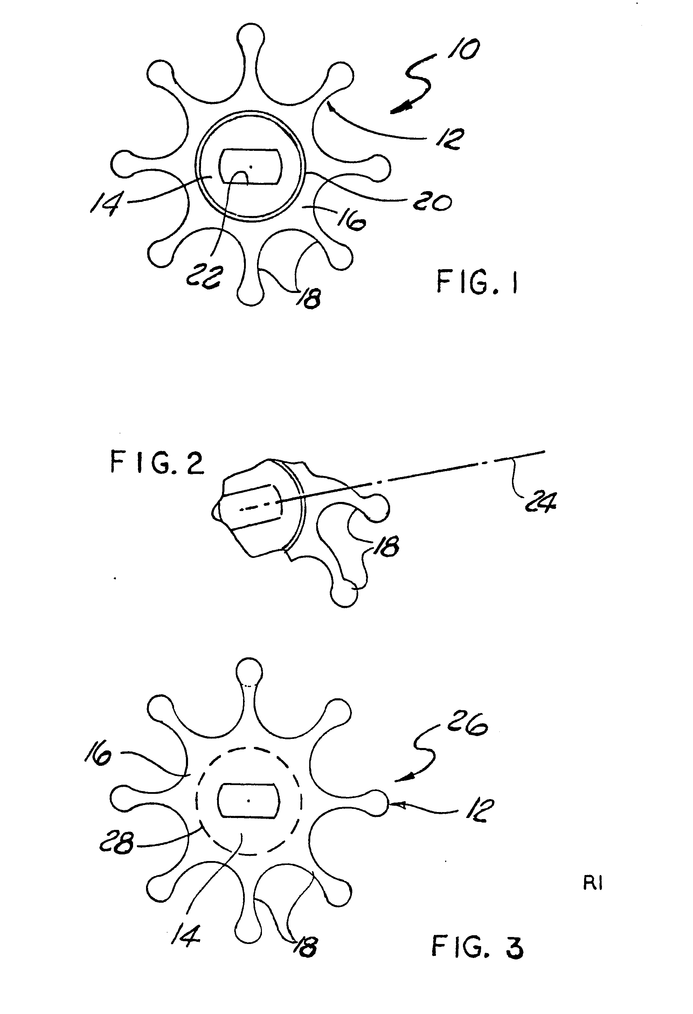

In den Fig. 1 und 2 ist die flexible Schaufelradanordnung mit 10 bezeichnet. Diese Schaufelradanordnung 10, die bisher in Pumpen eingesetzt wird, besteht aus einem Schaufelrad 12, an dessen Nabe 16 sich nach außen er-streckende Flügel 18 angeordnet sind, und einem Kern 14. Wie eingangs schon erwähnt, ist das Schaufelrad 12 aus einem relativ weichen Material und der Kern 14 aus einem relativ starren bzw. harten Material hergestellt. Das Schaufelrad 12 ist an dem Kern 14 mittels einer Klebever-bindung befestigt, die in Fig. 1 als dünne Schicht 20 dargestellt ist, obgleich sie normalerweise im Endprodukt

R.E.Knepshield-2

nur als dünne Linie erscheint. In der Mitte des Kernes 14 ist eine Öffnung 22 vorgesehen, die im eingebauten Zustand in ein Pumpengehäuse die Antriebswelle (nicht dargestellt) eines Pumpenmotors aufnimmt.

Das Schaufelrad 12 hat die Funktion eine Flüssigkeit innerhalb des Pumpengehäuses zu transportieren, wobei die Flügel 18 über eine nicht dargestellte Nocke innerhalb des Pumpengehäuses gleiten und die Flügel 18 aus ihrer normalen Form (siehe Fig. 1) dabei abbiegen, wie dies in Fig. 2 dargestellt ist. Diese Abbiegebewegung bewirkt einen Kraftarm entlang der Achse 24 und tendiert dazu, daß die Nabe 16 des Schaufelrades 12 aus elastomeren Material weg vom Kern 14 entlang der Grenzfläche zwischen den beiden Teilen gedrückt wird.

Die Klebeverbindung 20 enthält normalerweise ein unvulkanisiertes Polymer und Lösungsmittel sowie andere Bestandteile, die die Klebeverbindung bewirken und das Schaufelrad 12 an der äußeren Fläche des Kernes 14 haften lassen. Nachdem das Schaufelrad 12 um den Kern 14 herum befestigt ist, werden Hitze und Druck angewendet, um den Vulkanisierprozess zu komplettieren. Zu diesem Zeitpunkt erfolgt eine chemische Änderung, die bewirkt, daß die Nabe 16 des Schaufelrades 12 an der Klebeverbindung 20 haftet. Die so hergestellte Schaufelradanordnung kann dann durch die Antriebswelle gedreht werden und überträgt ein Drehmoment über den Kern 14, die Klebeverbindung 20 zu der Nabe 16 und letztlich zu den Flügeln 18 des Schaufelrades 12 und treibt eine Flüssigkeit durch das Pumpengehäuse.

R.E.Knepshield-2

In Fig. 3 ist die Schaufelradanordnung 26 nach der Erfindung dargestellt, die in der Konstruktion ähnlich ist wie die Schaufelradanordnung 10, die in den Fig. 1 und 2 dargestellt ist, bis auf einen bedeutenden Unterschied, nämlich das Fehlen der Klebverbindung 20. Die Verbindung zwischen dem Schaufelrad 12 der Schaufelradanordnung 26 und dem Kern 14 ist durch einen gestrichelt ausgeführten Kreis 28 dargestellt. Ein anderer bedeutender Unterschied von der Schaufelradanordnung 10 nach dem Stand der Technik ist die Verwendung von im wesentlichen gleichen Materialien für das Schaufelrad 12 und den Kern 14.

Die Verbindung 28 zwischen der Nabe 16 des Schaufelrades 12 und dem Kern 14 in der Anordnung 26 nach der vorliegenden Erfindung kann durch Vulkanisation oder durch reine Wärmebehandlung erreicht werden, die abhängig ist von der Wahl des Grundmaterials für das Schaufelrad 12 und den Kern 14, wobei die Nabe 16 und die Flügel 18 des Schaufelrades 12 immer aus identischem Material bestehen.

Weiterhin ist die Verbindung 28 zwischen dem Schaufelrad 12 und dem Kern 14 nach der vorliegenden Erfindung nicht nur eine einzelne abstrakte Linie, sondern mehr eine Grenzschicht, die sich sowohl auf der Außenseite als auch auf der Innenseite des gestrichelt dargestellten Kreises 28 erstreckt.

Der Kern 14 ist aus einem Material hergestellt, das im wesentlichen dasselbe ist wie das Material des Schaufelrades 12 bis auf die erforderliche unterschiedliche Härte. Um das Drehmoment, das von der Antriebswelle des Motors geliefert wird, auf die Flügel 18 des Schaufelrades 12 über den Kern 14 und die Nabe 16 übertragen zu können, ist es notwendig, daß der Kern 14 nahezu starr ist.

Die Schaufelradanordnung 26 nach der vorliegenden Erfindung kann entweder aus einem vulkanisierbaren Elastomer oder aus einem thermoplastischen Elastomer hergestellt sein.

Wenn das Material ein vulkanisierbares Elastomer ist, wie beispielsweise Neopren, ist der Kern 14 anfänglich aus einem Elastomer im ungehärteten Zustand mit einer Shorehärte hergestellt, die ausreichend ist das Drehmoment von der Antriebswelle des Motors auf die Flügel 18 des Schaufelrades zu übertragen. Die Nabe 16 und die Flügel 18 des Schaufelrades 12 sind im wesentlichen aus demselben vulkanisierbaren Material hergestellt, aber dieses Material weist eine viel kleinere Shorehärte auf, damit die Flügel 18 innerhalb des gewünschten Bereiches flexibel sind bzw. sich biegen können.

Der Kern 14, hergestellt aus dem ungehärteten vulkanisierbaren Elastomer, wird über einen Kerndorn montiert und in die Form eines Press- oder Spritzwerkzeuges eingesetzt, ohne einen Kleber bzw. eine Klebeverbindung dazuzufügen. Auf konventionelle Weise wird dann das Material für die Nabe 16 und die Flügel 18 des Schaufelrades 12 in die Form des Presswerkzeuges rund um den Kern 14 unter Anwendung eines entsprechenden Druckes und einer geeigneten Temperatur eingespritzt, was eine Vernetzung zwischen dem Material des Kernes 14 und dem Material des Schaufelrades 12 während der Aushärtung desselben bewirkt, mit dem Ergebnis, daß die fertige Anordnung 26 einstückig ist und eine einheitliche Struktur aufweist, die keine Klebeverbindung erfordert.

Wenn das Material ein thermoplastisches Elastomer ist, kann der Kern 14 auf übliche Weise in einer Press- oder Spritzform hergestellt und nach Abkühlen gelagert werden. Im abschließenden Press- oder Spritzverfahren wird der starre Kern 14, auf einem Kerndorn angeordnet, in das Press- oder Spritzwerkzeug eingesetzt. Ungleich dem oben beschriebenen ersten Verfahren ist die Pressung des Kernes 14 komplett bzw. abgeschlossen. Da das Material in dieser Ausführungsform thermoplastisch ist und daher wiederverformbar, kann der Kern 14 von Anfang an verpresst sein. Nach Einsetzen des Kerns 14 in das Press- oder Spritzwerkzeug, wie oben beschrieben, wird dann das flexieblere aus demselben Grundstoff wie das Material des Kernes 14 bestehende Material des Schaufelrades 12 rund um den Kern 14 in das Presswerkzeug eingespritzt und bildet die Nabe 16 und die Flügel 18 des Schaufelrades 12.

Bei Verwendung des thermoplastischen Materials wird durch die Anwendung von Hitze und Druck das in der Pressform noch fließende Material des Schaufelrades 12 die äußere Umfangsfläche des Kerns 14 berühren, was bewirkt, daß diese Fläche des Kerns 14 bis in eine genügende Tiefe schmilzt, so daß eine Verschmelzung zwischen der Nabe 16

0103720

und dem Kern 14 entsteht. Nach Abkühlung bildet die so entstandene Schaufelradanordnung 26 eine einheitliche, einstückige Struktur. Ein bevorzugtes thermoplastisches Material, das zur Ausformung der Schaufelradanordnung 26 nach der vorliegenden Erfindung verwendet werden kann, ist eine voll polymerisierte polyolefine Verbindung, die unter dem Warenzeichen "SANTOPRENE" durch die Firma Monsanto Company in den Handel gebracht wird.

Es können aber auch andere thermoplastische Materialien verwendet werden, wenn sie unterschiedliche Shorehärten zur Ausbildung des Kernes 14 und des Schaufelrades 12 gestatten.

In jeder Ausführungsform nach der Erfindung, entweder bei einem thermoplastischen oder einem vulkanisierbaren elastomeren Material können die unterschiedlichen Shorehärten für das Schaufelrad 12 und für den Kern 14 durch Beigabe von härtenden Füllstoffen in das elastomere Material jedes einzelnen Teiles erhalten werden. Der relativ harte Kern 14 enthält prozentual einen höheren Anteil an härtenden Füllstoffen als das relativ weichere Schaufelrad 12. Die Materialien unterschiedlicher Härte können auch durch Änderung der chemischen Struktur von einem der Materialien erhalten werden, vorausgesetzt, daß jedes Material in jedem Fall dieselbe polymere Grundstruktur enthält.

Durch das Verfahren nach der Erfindung werden die Naben 16 des Schaufelrades 12 und der Kern 14 an der Verbindung derselben eng vermischt. In anderen Worten ausgedrückt, ist die Verbindung zwischen dem Schaufelrad 12 und dem Kern 14 molekular zusammenhängend.

Als ein Ergebnis ist sicher, daß das Material der Schaufelradanordnung 26 überall zusammenhängend ist, so daß das Drehmoment, was durch die Antriebswelle des Motors an den Kern 14 weitergeleitet wird, voll auf die Flügel 18 des Schaufelrades 12 übertragen wird, ohne daß sich dabei die Nabe 16 des Schaufelrades 12 vom Kern 14 lösen kann.

R.E.Knepshield-2


## Patentansprüche


1. Schaufelradanordnung für Pumpen, die aus einem relativ starren Kern, der eine Antriebswelle aufnehmen kann, und aus einem relativ weichen Schaufelrad besteht, dessen Mittelteil oder Nabe mit dem Kern verbunden ist und das am äußeren Umfang mit flexiblen Flügeln versehen ist, d a d u r c h   g e k e n n z e i c h n e t , daß das Material des Schaufelrades (12) und des Kernes (14) aus dem gleichen Grundmaterial besteht, und daß die aus Schaufelrad (12) und Kern (14) bestehende Anordnung (26) eine einheitliche, einstückige Struktur bildet.

2. Schaufelradanordnung nach Anspruch 1, dadurch gekenn- zeichnet, daß die Materialien, aus denen das Schaufelrad (12) und der Kern (14) bestehen, an der Verbindung zwi- schen diesen Teilen innerlich vernetzt sind.

3. Schaufelradanordnung nach Anspruch 1, dadurch gekenn- zeichnet, daß das Schaufelrad (12) und der Kern (14) aus elastomeren Materialien hergestellt sind, die dasselbe Grundpolymer aufweisen.

4. Schaufelradanordnung nach Anspruch 3, dadurch gekennzeichnet, daß die Verbindung zwischen dem Schaufelrad (12) und dem Kern (14) eine zusammenhängende Molekularstruktur aufweist.

5. Schaufelradanordnung nach Anspruch 3, dadurch gekennzeichnet, daß die Härte des Schaufelrades (12) und des Kernes (14) durch Beigabe von härtenden Füllstoffen in das elastomere Material erhalten wird und daß der relativ starre Kern (14) einen höheren Prozentsatz von härtenden Füllstoffen enthält als das relativ weiche Schaufelrad (12).

6. Schaufelradanordnung nach Anspruch 1, dadurch gekennzeichnet, daß das Schaufelrad (12) und der Kern (14) aus im wesentlichen dem gleichen Thermoplastik- Elastomer zusammengesetzt sind.

7. Schaufelradanordnung nach Anspruch 6, dadurch gekennzeichnet, daß das Elastomer eine polymerisierte, polyolefine Verbindung ist.

8. Schaufelradanordnung nach Anspruch 1, dadurch gekennzeichnet, daß das Schaufelrad (12) und der Kern (14) aus demselben gehärteten vulkanisierbaren Elastomer zusammengesetzt ist.

9. Verfahren zum Herstellen einer einheitlichen Schaufelradanordnung für Pumpen, die einen Kern und ein Schaufelrad aufweist, das aus einer Nabe und nach außen sich er-

0103720

R.E.Knepshield-2

streckenden Flügeln besteht, wobei der Kern aus einem relativ starren Material und das Schaufelrad aus einem relativ weichem Material besteht, gekennzeichnet durch folgende Verfahrensschritte :

Formung des Kernes (14) aus einem relativ starren bzw. harten Material,

Spritzen des Schaufelrades (12) aus relativ weichem Material um den Kern (14) herum, ohne eine dazwischenliegende Klebeverbindung (20) hinzuzufügen,

Verwendung eines gleichen Grundpolymers für den Kern (14) und das Schaufelrad (12), so daß der Kern (14) und das Schaufelrad (12) an der Verbindung zwischen den beiden Teilen zu einer Einheit vermischt werden, wenn das Schaufelrad (12) um den Kern (14) gespritzt wird.

10. Verfahren nach Anspruch 9, dadurch gekennzeichnet, daß das Material für beide miteinander zu verbindenden Teile im wesentlichen das gleiche thermoplastische Elastomer ist,

daß das Schaufelrad (12) im flüssigen Zustand um den Kern (14) herum unter genügend großer Hitze und entsprechenden Druck gespritzt wird,

und daß die äußere Umfangsfläche des Kerns (14) bis in ausreichende Tiefe geschmolzen wird, so daß eine innige Verbindung zwischen dem Kern (14) und dem Schaufelrad (12) entsteht.

11. Verfahren nach Anspruch 9, dadurch gekennzeichnet, daß das Material für die miteinander zu verbindenden Teile im wesentlichen das gleiche vulkanisierbare Elastomer ist und der Kern (14) anfänglich aus diesem relativ harten Material in stofflich ungehärteter Form hergestellt ist,

R.E.Knepshield-2

daß das Schaufelrad (12) um den Kern (14) herum gespritzt wird, während das harte Material im ungehärteten Zustand verbleibt,

und daß die Materialien zusammen gehärtet werden, so daß eine Vernetzung der Materialien an der Verbindung zwischen dem Schaufelrad (12) und dem Kern (14) entsteht.

FIG. 1

FIG. 2

FIG. 3

RI

# EUROPÄISCHER RECHERCHENBERICHT

0103720

Nummer der Anmeldung

**Europäisches Patentamt**

EP 83 10 7642

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y | US-A-3 053 190  (CARLSON) *Spalte 1, Zeile 71 bis Spalte 2, Zeile 7; Figuren* | 1,2 | F 04 C 5/00 F 01 C 21/08 B 29 F 1/10 |
| Y | US-A-3 136 370  (CARLSON) *Spalte 2, Zeilen 1-50; Figuren* | 1,2 | |
| Y | GB-A-2 075 599  (BRUNSWICK CORP.) *Seite 2, Zeilen 8-18; Figuren 2,3,4* | 1,5 | |
| Y | FR-A-1 353 064  (HOOKER CHEM. CORP.) *Seiten 1,2; Seite 3, rechte Spalte, vorletzter Absatz* | 1-11 | |
| Y | FR-A-2 348 037  (DEMAG KUNSTSTOFFTECHNIK) *Seite 1, Zeile 17 bis Seite 2, Zeile 23; Seite 3, letzter Absatz; Seite 4, Zeilen 1-11; Seite 7, Ansprüche 1-6* | 2-7,9, 10 | **RECHERCHIERTE SACHGEBIETE (Int. Cl. ³)** F 04 C B 29 F |
| Y | FR-A-2 093 656  (DUNLOP HOLDINGS LTD) *Seite 1; Seite 2, Zeilen 1-22* | 2-11 | |

---            -/-

Der vorliegende Recherchenbericht wurde für alle Patentansprüche erstellt.

| Recherchenort DEN HAAG | Abschlußdatum der Recherche 05-12-1983 | Prüfer KAPOULAS T. |
|---|---|---|

## EUROPÄISCHER RECHERCHENBERICHT

Europäisches
Patentamt

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y | FR-A-1 516 032 (COLUMBIAN CARBON CO.) *Seite 2, linke Spalte, letzter Absatz und rechte Spalte, erster Absatz; Figuren 1-5* ----- | 3,9,10 | |

**RECHERCHIERTE SACHGEBIETE (Int. Cl. ³)**

Der vorliegende Recherchenbericht wurde für alle Patentansprüche erstellt.

| Recherchenort | Abschlußdatum der Recherche | Prüfer |
|---|---|---|
| DEN HAAG | 05-12-1983 | KAPOULAS T. |